# EUROPÄISCHE PATENTANMELDUNG

(11) **EP 3 299 077 A1**
(43) Veröffentlichungstag der Anmeldung: **28.03.2018**
(21) Anmeldenummer: 17173560.8
(22) Anmeldetag: 30.05.2017
(51) Int. Cl.: B01D 53/04, F24F 3/16, B01D 46/30

(54) **FILTERKASSETTE MIT VERBESSERTER DURCHSTRÖMUNG DES FILTERMATERIALS**

(30) Priorität: 23.09.2016 DE 202016005873 U
(71) Anmelder: Prima Klima Trading CZ s.r.o., 33828 Radnice u Rokycany (CZ)
(72) Erfinder: Reeh, Gerhard, 33828 Radnice u Rokycany (CZ)
(74) Vertreter: SR Huebner - Munich Patentanwaltspartnerschaft mbB

(57) **Zusammenfassung**

Es wird eine Filterkassette beschrieben, welche eine zumindest teilweise gasdurchlässige erste Stirnfläche, eine gegenüber der ersten Stirnfläche angeordnete zumindest teilweise gasdurchlässige zweite Stirnfläche und eine umlaufende Randwandung aufweist, die zusammen mit der ersten Stirnfläche und der zweiten Stirnfläche einen Innenbereich der Filterkassette umgibt. Die Filterkassette umfasst eine Mehrzahl von Trennwänden, die sich innerhalb des Innenbereichs der Filterkassette jeweils von der ersten Stirnfläche zur zweiten Stirnfläche erstrecken und den Innenbereich der Filterkassette in eine Mehrzahl von Abteilungen unterteilen. An mindestens einer von einer Innenseite der Randwandung und einer oder mehreren Trennwänden sind zumindest abschnittsweise eine oder mehrere Rippen angebracht oder angeformt, wobei die Rippen dazu ausgelegt sind, sich in ein in den Abteilungen anordenbares Filtermaterial hinein zu erstrecken.

## Beschreibung

Die Erfindung betrifft eine Filterkassette. Des Weiteren betrifft die Erfindung eine Filtervorrichtung mit einer Filterkassette.

Es sind Filterkassetten für den Einsatz in einer Filtervorrichtung bekannt, die mit einem Filtermaterial befüllt sind. Dabei werden als Filtermaterialien häufig Aktivkohlepartikel oder Kokosnussschale verwendet, welche in der Lage sind, Verunreinigungen eines durchströmenden Gases zu adsorbieren.

Es ist Aufgabe der Erfindung, eine Filterkassette zur Verfügung zu stellen, bei der gewährleistet ist, dass ein zu filternde Gasstrom durch das Filtermaterial in ausreichendem Maß gefiltert wird.

Diese Aufgabe wird durch eine Filterkassette gemäß Anspruch 1, durch eine Filterkassette gemäß Anspruch 10, durch eine Filtervorrichtung gemäß Anspruch 14 sowie durch ein Verfahren zur Verbesserung der Wirksamkeit einer Filterkassette gemäß Anspruch 15 gelöst.

Eine Filterkassette gemäß den Ausführungsformen der Erfindung umfasst eine zumindest teilweise gasdurchlässige erste Stirnfläche, eine gegenüber der ersten Stirnfläche angeordnete zumindest teilweise gasdurchlässige zweite Stirnfläche und eine umlaufende Randwandung, die zusammen mit der ersten Stirnfläche und der zweiten Stirnfläche einen Innenbereich der Filterkassette umgibt. Darüber hinaus umfasst die Filterkassette eine Mehrzahl von Trennwänden, die sich innerhalb des Innenbereichs der Filterkassette jeweils von der ersten Stirnfläche zur zweiten Stirnfläche erstrecken und den Innenbereich der Filterkassette in eine Mehrzahl von Abteilungen unterteilen. An mindestens einer von einer Innenseite der Randwandung und einer oder mehreren Trennwänden sind zumindest abschnittsweise eine oder mehrere Rippen angebracht oder angeformt, wobei die Rippen dazu ausgelegt sind, sich in ein in den Abteilungen anordenbares Filtermaterial hinein zu erstrecken.

Die an der jeweiligen Wandung entlanglaufenden Rippen erstrecken sich in das im Inneren der Abteilungen angeordnete Filtermaterial hinein. Durch die Rippen wird insbesondere verhindert, dass ein zu filterndes Gas im Bereich der Wandungen unmittelbar entlang der sich dort ausbildenden Hohlräume ungefiltert entlangströmen kann. Durch die Rippen wird dieser Strömungspfad entlang den Wandungen blockiert. Außerdem wird der Gasstrom durch die Rippen ins Innere der Abteilungen umgeleitet, wo sich ausreichend Filtermaterial befindet. Durch die Umleitung des Gasstroms von den Wandungen weg hin zum Inneren der Abteilungen wird der Kontakt zwischen dem zu filternden Gasstrom und dem Filtermaterial intensiviert. Darüber hinaus wird die Kontaktzeit zwischen dem Gasstrom und dem Filtermaterial erhöht. insgesamt ergibt sich dadurch eine signifikante Verbesserung der Filterwirkung, so dass die Effizienz der Filterung durch die Filterkassette verbessert wird. Dabei stellt die Anbringung oder Anformung der zusätzlichen Rippen eine sehr einfache konstruktive Maßnahme dar, die lediglich geringen Mehraufwand erfordert.

Vorzugsweise ist die Filterkassette zum Filtern eines Gases ausgebildet. Weiter vorzugsweise ist die Filterkassette zum Filtern von Luft ausgebildet. Weiter vorzugsweise sind die Abteilungen der Filterkassette von zu filterndem Gas durchströmbar. Vorzugsweise ist die Filterkassette in axialer Richtung durch die erste Stirnfläche, das Filtermaterial und die zweite Stirnfläche hindurch von zu filterndem Gas durchströmbar.

Vorzugsweise ist der Innenbereich der Filterkassette mit einem Filtermaterial befüllt.

Vorzugsweise sind die Abteilungen der Filterkassette jeweils mit einem Filtermaterial befüllt.

Vorzugsweise handelt es sich bei dem Filtermaterial um mindestens eines von Aktivkohle und Kokosnussschale.

Vorzugsweise handelt es sich bei dem Filtermaterial um ein partikelförmiges Filtermaterial. Weiter vorzugsweise handelt es sich bei dem Filtermaterial um ein partikelförmiges Filtermaterial mit einer durchschnittlichen Korngröße im Bereich von 0,5 mm bis 5 mm. Weiter vorzugsweise handelt es sich bei dem Filtermaterial um ein partikelförmiges Filtermaterial mit einer durchschnittlichen Korngröße im Bereich von 2 mm bis 4 mm.

Vorzugsweise ist die Filterkassette in Form einer Scheibe ausgebildet.

Vorzugsweise ist die Filterkassette in Form einer Scheibe mit kreisförmigen oder polygonalen oder rechteckigen Stirnflächen ausgebildet.

Vorzugsweise erstreckt sich die umlaufende Randwandung vom Rand der ersten Stirnfläche zum Rand der zweiten Stirnfläche.

Vorzugsweise ist eine Höhe der Filterkassette geringer als ein maximaler Durchmesser der Filterkassette.

Vorzugsweise ist die erste Stirnfläche der Filterkassette parallel zur zweiten Stirnfläche angeordnet.

Vorzugsweise erstrecken sich die Trennwände in axialer Richtung von der ersten Stirnfläche zur zweiten Stirnfläche. Vorzugsweise sind die Trennwände in Richtung der Strömung des Gases ausgerichtet. Vorzugsweise sind die Trennwände senkrecht zu den Stirnflächen angeordnet.

Vorzugsweise besteht die Filterkassette aus Kunststoff. Vorzugsweise handelt es sich bei der Filterkassette um ein Spritzgussteil.

Vorzugsweise sind die Rippen zumindest abschnittweise entlang der jeweiligen Wandung verlaufend angebracht oder angeformt. Vorzugsweise verlaufen die Rippen im Wesentlichen in Richtung parallel zu den Stirnflächen. Vorzugsweise verlaufen die Rippen etwa auf halber Höhe zwischen den Stirnflächen im Wesentlichen in Richtung parallel zu den Stirnflächen entlang der Innenseite der Randwandung und/oder der einen oder mehreren Trennwände. Vorzugsweise sind die Rippen etwa mittig zwischen den beiden Stirnflächen im Wesentlichen in Richtung parallel zu den Stirnflächen verlaufend an der Innenseite der Randwandung und/oder den einen oder mehreren Trennwänden angeordnet.

Vorzugsweise sind die Rippen dazu ausgelegt, einen Kontakt zwischen einem zu filternden Gas und dem Filtermaterial zu intensivieren.

Vorzugsweise sind die Rippen dazu ausgelegt, ein im Wesentlichen ungefiltertes Entlangströmen eines zu filternden Gases an der Innenseite der Randwandung und/oder den einen oder mehreren Trennwänden zu verhindern.

Vorzugsweise sind die Rippen dazu ausgelegt, eine Kontaktzeit zwischen einem zu filternden Gas und dem Filtermaterial zu erhöhen.

Vorzugsweise sind die Rippen dazu ausgelegt, ein zu filterndes Gas, das die Filterkassette in Richtung von der ersten zur zweiten Stirnfläche durchströmt, von der Innenseite der Randwandung und/oder den einen oder mehreren Trennwänden aus ins Innere der Abteilungen zu lenken.

Vorzugsweise sind die Rippen dazu ausgelegt, eine Durchströmung von an der Innenseite der Randwandung und/oder den einen oder mehreren Trennwänden ausgebildeten Hohlräumen des Filtermaterials zu verhindern.

Vorzugsweise handelt es sich bei dem Filtermaterial um ein partikelförmiges Filtermaterial und die Rippen sind dazu ausgelegt, an der Innenseite der Randwandung und/oder an den einen oder mehreren Trennwänden ausgebildete Hohlräume des Filtermaterials abzuschatten.

Vorzugsweise sind infolge eines schwerkraftbedingten Absackens des Filtermaterials Freiräume in oberen Bereichen der Abteilungen ausbildbar und an mindestens einer von der Innenseite der Randwandung und einer oder mehreren Trennwänden sind ein oder mehrere Abschattungsstege angebracht oder angeformt, die dazu ausgelegt sind, die sich ausbildenden Freiräume ganz oder zumindest zum Teil abzuschatten. Dabei ist der Begriff "oben" auf die Richtung der Schwerkraft bezogen.

Vorzugsweise ist an mindestens einer von der ersten und der zweiten Stirnfläche der Filterkassette ein gasdurchlässiges Abdeckmaterial angebracht, das das Filtermaterial innerhalb der Filterkassette hält.

Vorzugsweise handelt es sich bei dem an den Stirnflächen angebrachten gasdurchlässigen Abdeckmaterial um ein Fasermaterial oder um ein Vliesmaterial oder um ein Vliesmaterial aus Polyethylenfasern.

Vorzugsweise ist das Abdeckmaterial auf eine jeweilige Stirnfläche der Filterkassette thermisch aufgeschweißt, wobei das Abdeckmaterial mit den Trennwänden verschweißt ist.

Vorzugsweise handelt es sich bei dem gasdurchlässigen Abdeckmaterial um ein aus zwei oder mehr verschiedenen Fasern bestehendes Mehrkomponenten-Spinnvlies.

Vorzugsweise handelt es sich bei dem Abdeckmaterial um ein Mehrkomponenten-Spinnvlies, das verspinnte Polypropylenfasern an einer dem Innenbereich der Filterkassette zugewandten Seite und verspinnte Polyamidfasern an einer vom Innenbereich der Filterkassette abgewandten Seite umfasst.

Eine Filterkassette gemäß den Ausführungsformen der Erfindung umfasst eine zumindest teilweise gasdurchlässige erste Stirnfläche, eine gegenüber der ersten Stirnfläche angeordnete zumindest teilweise gasdurchlässige zweite Stirnfläche und eine umlaufende Randwandung, die zusammen mit der ersten Stirnfläche und der zweiten Stirnfläche einen Innenbereich der Filterkassette umgibt. Darüber hinaus umfasst die Filterkassette eine Mehrzahl von Trennwänden, die sich innerhalb des Innenbereichs der Filterkassette jeweils von der ersten Stirnfläche zur zweiten Stirnfläche erstrecken und den Innenbereich der Filterkassette in eine Mehrzahl von Abteilungen unterteilen. Infolge eines schwerkraftbedingten Absackens des Filtermaterials sind in oberen Bereichen der Abteilungen Freiräume ausbildbar. An mindestens einer von einer Innenseite der Randwandung und einer oder mehreren Trennwänden sind ein oder mehrere Abschattungsstege angebracht oder angeformt, die dazu ausgelegt sind, die sich ausbildenden Freiräume ganz oder zumindest zum Teil abzuschatten.

Bei Filterkassetten, die mit einem Filtermaterial befüllt sind, rutscht das Filtermaterial schwerkraftbedingt in den unteren Bereich der Filterkassette ab, wobei die Begriffe "oben" und "unten" in Bezug auf die Richtung der Schwerkraft verwendet werden. Um die Absackung des Filtermaterials zu verringern, ist der Innenraum der Filterkassette durch eine Mehrzahl von Trennwänden in einzelne Abteilungen unterteilt, die jeweils separat mit Filtermaterial befüllt sind. Innerhalb jeder einzelnen Abteilung der Filterkassette kommt es jedoch zu einem schwerkraftbedingten Absacken des Filtermaterials, so dass auch hier im obersten Bereich der einzelnen Abteilungen Freiräume entstehen können, durch die das zu filternde Gas weitgehend ungefiltert hindurchströmen kann. Durch diese Absackung und die dadurch verursachte Ausbildung von Freiräumen wird die Wirksamkeit der Filterung verringert.

Zur Verbesserung der Filterwirkung wird eine Filterkassette vorgeschlagen, bei der jeweils in den oberen Bereichen der Abteilungen Abschattungsstege angeordnet sind, die sich ins Innere der Abteilungen hinein erstrecken und dazu ausgebildet sind, die entstehenden Freiräume abzudecken. Durch diese Abschattungsstege wird die ungehinderte Durchströmung der Freiräume verhindert. Dazu können die Abschattungsstege beispielsweise in ihrer Gestalt der Form der zu erwartenden Freiräume entsprechend ausgebildet sein. Durch die Abschattungsstege wird einerseits der Durchstrom von zu filterndem Gas durch die infolge von Absackung entstehenden Freiräume verhindert. Darüber hinaus wird der Gasstrom durch die Abschattungsstege ins Innere der Abteilungen umgeleitet, wo sich ausreichend Filtermaterial befindet. Infolge der Umleitung des Gasstroms wird die Wechselwirkung mit dem Filtermaterial verbessert. Darüber hinaus wird die Kontaktzeit zwischen dem zu filternden Gasstrom und dem Filtermaterial erhöht. Insgesamt kann durch eine geeignete Anordnung und Ausgestaltung von Abschattungsstegen die Filterwirkung der Filterkassette deutlich erhöht werden, wobei der konstruktive Mehraufwand für die Bereitstellung der Abschattungsstege gering ist.

Vorzugsweise sind die Abschattungsstege dazu ausgelegt, einen innerhalb einer Abteilung höchstgelegenen Abschnitt der Abteilung abzuschatten, in dem sich Freiräume ausbilden.

Vorzugsweise erstrecken sich die Abschattungsstege parallel zu den Stirnflächen von der Wandung ins Innere der jeweiligen Abteilung hinein.

Vorzugsweise sind die Abschattungsstege so ausgebildet, dass das zu filternde Gas, das über die Stirnflächen durch die Filterkassette hindurchströmt, durch die Abschattungsstege ganz oder teilweise am Durchströmen der Freiräume gehindert wird.

Vorzugsweise sind die Abschattungsstege in den oberen Bereichen der Abteilungen angeordnet und erstrecken sich jeweils von einem oberen Bereich einer Abteilung aus nach unten.

Vorzugsweise ist eine Form der Abschattungsstege den sich ausbildenden Freiräumen entsprechend gewählt. Vorzugsweise ist eine Form der Abschattungsstege so gewählt, dass die Abschattungsstege die Freiräume überdecken und eine Durchströmung der Freiräume verhindern.

Vorzugsweise verläuft eine untere Kontur der Abschattungsstege in horizontaler Richtung.

Vorzugsweise ist die Filterkassette in einer vorgegebenen Orientierung angeordnet, wobei infolge der vorgegebenen Orientierung feststeht, in welchen Bereichen der Filterkassette sich das Filtermaterial schwerkraftbedingt ansammelt und in welchen Bereichen der Filterkassette sich Freiräume ausbilden.

Vorzugsweise weist die Filterkassette an der Außenseite der Randwandung eine Positionierausnehmung zur Festlegung der Orientierung der Filterkassette auf.

Eine Filtervorrichtung, welche eine Filterkassette wie oben beschrieben umfasst, wobei die Filtervorrichtung zum Filtern eines Gases, insbesondere zum Filtern von Luft ausgebildet ist.

Vorzugsweise ist die Filterkassette innerhalb der Filtervorrichtung so angeordnet, dass ein zu filterndes Gas durch die erste Stirnfläche, das Filtermaterial und die zweite Stirnfläche der Filterkassette strömt.

Vorzugsweise ist die Filterkassette in der Filtervorrichtung so gehaltert, dass die Stirnflächen der Filterkassette im Wesentlichen senkrecht zu einer Gasströmung durch die Filtervorrichtung stehen.

Es wird außerdem ein Verfahren zur Verbesserung der Wirksamkeit einer Filterkassette beschrieben. Die Filterkassette umfasst eine zumindest teilweise gasdurchlässige erste Stirnfläche, eine gegenüber der ersten Stirnfläche angeordnete zumindest teilweise gasdurchlässige zweite Stirnfläche und eine umlaufende Randwandung, die zusammen mit der ersten Stirnfläche und der zweiten Stirnfläche einen Innenbereich der Filterkassette umgibt. Darüber hinaus umfasst die Filterkassette eine Mehrzahl von Trennwänden, die sich innerhalb des Innenbereichs der Filterkassette jeweils von der ersten Stirnfläche zur zweiten Stirnfläche erstrecken und den Innenbereich der Filterkassette in eine Mehrzahl von Abteilungen unterteilen. Das Verfahren umfasst Ermitteln der Bereiche der Filterkassette, an denen infolge eines schwerkraftbedingten Absackens des Filtermaterials von einem zu filternden Gas im Wesentlichen ungefiltert durchströmbare Freiräume auftreten. Darüber hinaus umfasst das Verfahren Vorsehen von einem oder mehreren Abschattungsstegen, die sich von mindestens einer von einer Innenseite der Randwandung und einer oder mehreren Trennwänden aus zumindest so weit ins Innere einer Abteilung erstrecken, dass entstehende Freiräume ganz der teilweise durch die Abschattungsstege abgeschattet werden.

Nachfolgend wird die Erfindung anhand eines in der Zeichnung dargestellten Ausführungsbeispiels weiter beschrieben. Es zeigen:
Fig. 1 eine Filtervorrichtung mit einem trichterförmigen Halterungsteil und einer Filterkassette, die als Saugfilter einsetzbar ist;
Fig. 2a eine Seitenansicht des trichterförmigen Halterungsteils;
Fig. 2b eine Draufsicht auf das trichterförmige Halterungsteil;
Fig. 2c eine Schrägbildansicht des trichterförmigen Halterungsteils;
Fig. 3a eine Schrägbildansicht einer Filterkassette;
Fig. 3b eine Draufsicht auf die Filterkassette;
Fig. 3c eine Seitenansicht der Filterkassette;
Fig. 4a zeigt eine Filterkassette in Schrägbilddarstellung;
Fig. 4b zeigt eine erste Detailansicht der in Fig. 4a gezeigten Filterkassette;
Fig. 4c zeigt eine zweite Detailansicht der in Fig. 4a gezeigten Filterkassette;
Fig. 5 zeigt die Wirkungsweise der entlang der jeweiligen Wandungen verlaufenden Rippen; und
Fig. 6 eine Filtervorrichtung mit einem trichterförmigen Halterungsteil, einer Filterkassette und einem weiteren trichterförmigen Halterungsteil, die als Inlinefilter einsetzbar ist.

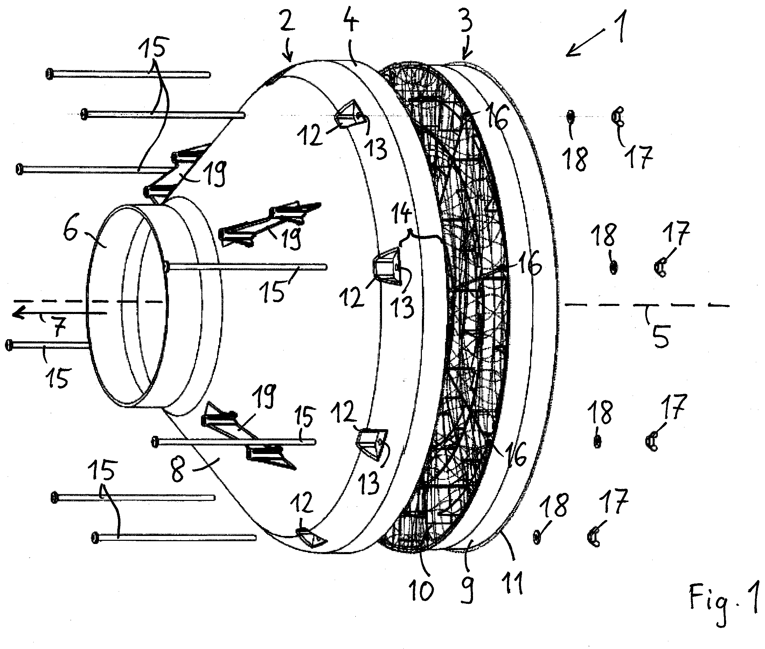

In Fig. 1 ist eine Filtervorrichtung 1 gezeigt, die beispielsweise als Saugfilter eingesetzt werden kann. Die Filtervorrichtung 1 umfasst ein trichterförmiges Halterungsteil 2 sowie eine Filterkassette 3, die mit einem Filtermaterial gefüllt ist. Dabei ist die Filterkassette 3 in eine entsprechende Aufnahme 4 des trichterförmigen Halterungsteils 2 einsetzbar und wird durch das trichterförmige Halterungsteil 2 gehaltert. Das zu reinigende Gas strömt in axialer Richtung durch die Filtervorrichtung 1, wobei die axiale Symmetrieachse 5 der Filtervorrichtung 1 in Fig. 1 als gestrichelte Linie dargestellt ist.

Das trichterförmige Halterungsteil 2 weist an einem in axialer Richtung ersten Ende einen Anschluss 6 für einen Schlauch oder ein Rohr auf, wobei der Anschluss 6 beispielsweise in Form eines Anschlussstutzens realisiert sein kann. Das an den Anschluss 6 angeschlossene Absaugrohr bzw. der Absaugschlauch kann beispielsweise mit einem Sauggebläse, einem Impeller oder einem Ventilator verbunden werden. Auf diese Weise kann Gas, insbesondere Luft, über die Anschlussöffnung des Anschlusses 6 in Richtung des Pfeils 7 aus der Filtervorrichtung 1 abgesogen werden. Ausgehend von dem Anschluss 6 weitet sich die Wandung des trichterförmigen Halterungsteils 2 im Bereich 8 in axialer Richtung trichterförmig nach außen auf und bildet die Aufnahme 4 für die Filterkassette 3. Die Aufnahme 4 befindet sich am zweiten Ende des trichterförmigen Halterungsteils 2, das in axialer Richtung betrachtet gegenüber vom ersten Ende des trichterförmigen Halterungsteils 2 angeordnet ist.

Im Beispiel von Fig. 1 ist die Filterkassette 3 als zylinderförmige Scheibe mit kreisförmigen Stirnflächen 10 und 11 ausgebildet, und dementsprechend weist auch die Aufnahme 4 für die Filterkassette 3 eine kreisförmige Kontur auf. Dabei ist der Durchmesser der Aufnahme 4 deutlich größer als der Durchmesser am Anschluss 6. Beispielsweise kann der Durchmesser der Aufnahme 4 etwa 1,5 bis 7 mal so groß wie der Durchmesser des Anschlusses 6 sein, weiter vorzugsweise 2 bis 5 mal so groß wie der Durchmesser des Anschlusses 6 sein. Die Aufnahme 4 ist zur Halterung der Filterkassette 3 ausgelegt. Hierzu wird die Filterkassette 3 so in die Aufnahme 4 eingesetzt, dass der Rand 9 der Filterkassette 3 ringsum vom Randbereich der Aufnahme 4 umschlossen wird. Die Innenkontur der Aufnahme 4 entspricht also etwa der Außenkontur des Randes 9 der Filterkassette 3. Entlang des Umfangs der Aufnahme 4 sind in regelmäßigen Abständen eine Mehrzahl von Einbuchtungen 12 vorgesehen, die jeweils Schraublöcher 13 zur Verschraubung der Filterkassette 3 mit dem trichterförmigen Halterungsteil 2 aufweisen. Diese Einbuchtungen 12 sind jeweils in einem gewissen Abstand 14 zum Rand der Aufnahme 4 angeordnet. Dabei liegt die Filterkassette 3 vorzugsweise ringsum auf den innerhalb der Aufnahme 4 angeordneten Schraublochdurchführungen auf, die sich an die Einbuchtungen 12 anschließen. Zur Verschraubung des trichterförmigen Halterungsteils 2 mit der Filterkassette 3 werden eine Mehrzahl von Gewindeschrauben 15 von der Seite des trichterförmigen Halterungsteils 2 aus durch die Schraublöcher 13 des trichterförmigen Halterungsteils 2 und die an entsprechenden Positionen angeordneten Schraublöcher 16 der Filterkassette 3 in axialer Richtung hindurchgeschoben und mittels der Flügelmuttern 17 verschraubt, wobei zwischen den Flügelmuttern 17 und der Filterkassette 3 Beilagscheiben 18 angeordnet sein können. An der Außenseite des sich trichterförmig aufweitenden Bereichs 8 des trichterförmigen Halterungsteils 2 sind insgesamt vier Abstandselemente 19 angebracht, die beim Einbau der Filtervorrichtung 1 an einer jeweiligen Einbauwand anliegen und so einen gewissen Abstand zwischen der Einbauwand und dem trichterförmigen Halterungsteil 2 herstellen.

Innerhalb der Filterkassette 3 ist das Filtermaterial angeordnet, das von dem zu reinigenden Gas durchströmt wird und dabei Verunreinigungen absorbiert. Bei dem Filtermaterial kann es sich beispielsweise um Aktivkohle handeln, welche beispielsweise in durchschnittlichen Partikelgrößen im Bereich von etwa 0,5 mm bis 5 mm, weiter vorzugsweise im Bereich von 2 mm bis 4 mm einsetzbar ist. Als Filtermaterial können beispielsweise auch Partikel aus Kokosnussschale eingesetzt werden, welche sich insbesondere zur Absorption von organischen Verunreinigungen des zu filternden Gases eignen. Das Innere der Filterkassette 2 ist durch eine Vielzahl von Trennwänden in eine Vielzahl von einzelnen Filterkammern unterteilt, die jeweils mit Filtermaterial gefüllt sind und separat von dem zu reinigenden Gas durchströmt werden. Dabei ist an den beiden Stirnflächen 10 und 11 der Filterkassette 3 jeweils ein gasdurchlässiges Abdeckmaterial angeordnet, das die Filterkammern an den Stirnflächen 10 und 11 gasdurchlässig abschließt und verhindert, dass das innerhalb der Filterkammern befindliche Filtermaterial aus den Filterkammern austreten kann. Bei dem Abdeckmaterial kann es sich beispielsweise um ein Vliesmaterial aus Kunststofffasern handeln, beispielsweise um ein Vliesmaterial aus Polyethylenfasern. Bei dem Abdeckmaterial kann es sich beispielsweise um ein Spinnvlies handeln, beispielsweise um ein Mehrkomponenten-Spinnvlies, welches durch Verwendung von zwei unterschiedlichen Fasern eine erhöhte Steifigkeit bietet. Vorzugsweise wird ein Vliesmaterial mit einer Dicke von beispielsweise 0,5 mm verwendet. Ein derartiges Vliesmaterial zeichnet sich durch hohe Gasdurchlässigkeit aus und kann von dem zu filternden Gas durchströmt werden. Sofern das Vliesmaterial aus Kunststofffasern hergestellt ist, kann das Vliesmaterial durch thermisches Anschweißen mit dem Rand 9 und den Trennwänden im Inneren der Filterkassette 3 verbunden werden. Dabei wird das Abdeckmaterial vorzugsweise etwas größer als die Stirnflächen 10 und 11 der Filterkassette 3 zugeschnitten, so dass das Abdeckmaterial über den Rand 9 der Filterkassette 3 hinaus etwas übersteht. Dadurch deckt das Vliesmaterial die Kante am Rand der Filterkassette 3 ab, so dass das Vliesmaterial nach dem Einsetzen der Filterkassette 3 in die Aufnahme 4 zwischen dem Rand 9 der Filterkassette 3 und der Aufnahme 4 angeordnet ist und beim Zusammenschrauben der Filtervorrichtung mittels der Gewindeschrauben 15 in axialer Richtung zwischen dem Rand 9 der Filterkassette 3 und der Aufnahme 4 so zusammengedrückt wird, dass zwischen der Aufnahme 4 und der Filterkassette 3 ein gasdichter Abschluss ausgebildet wird.

Bei dem in Fig. 1 gezeigten Beispiel ist die Filterkassette 3 als Scheibe mit kreisrunden Stirnflächen 10 und 11 ausgebildet. Dementsprechend weist auch die Aufnahme 4 für die Filterkassette 3 eine kreisrunde Innenkontur auf, um die Filterkassette 3 formschlüssig aufnehmen zu können. Daher ist das trichterförmige Halterungsteil 2 abgesehen von den Einbuchtungen 12 und den Abstandselementen 19 als rotationssymmetrisches Formteil ausgebildet, welches rotationssymmetrisch um die axiale Symmetrieachse 5 ausgebildet ist.

Die Filterkassette 3 muss allerdings nicht notwendigerweise eine kreisförmige Stirnfläche aufweisen. Die Filterkassette 3 könnte ebenso eine rechteckige, quadratische oder polygonale Stirnfläche aufweisen. In diesem Fall würde die Kontur der Aufnahme 4 der Kontur der Filterkassette 3 entsprechen, so dass sich in diesem Fall eine quadratische, rechteckige oder polygonale Aufnahme 4 ergeben würde. Auch in diesem Fall würde sich die Wandung des trichterförmigen Halterungsteils 2 vom Anschluss 6 aus trichterförmig zur Aufnahme 4 hin aufweiten. Allerdings wäre das Halterungsteil 2 in diesem Fall nicht rotationssymmetrisch, sondern lediglich drehsymmetrisch ausgebildet.

Zur Intensivierung der Filterwirkung könnte in das trichterförmige Halterungsteil 2 auch ein Stapel aus mehreren hintereinander angeordneten Filterkassetten eingesetzt werden, wobei benachbarte Filterkassetten mit ihren Stirnflächen aufeinander aufliegen. Ein zu filterndes Gas würde dann durch die hintereinander angeordneten Filterkassetten strömen, wobei das zu filternde Gas beim Durchtritt durch jede der Filterkassetten weiter gereinigt wird, so dass durch die Bereitstellung mehrerer hintereinander angeordneter Filterkassetten die Intensität der Filterung des Gases erhöht wird.

Das trichterförmige Halterungsteil 2 kann beispielsweise aus Metall, Kunststoff oder Keramik bestehen. Vorzugsweise ist das trichterförmige Halterungsteil 2 als Kunststoffformteil ausgebildet, welches beispielsweise mittels eines Spritzgussverfahrens herstellbar ist.

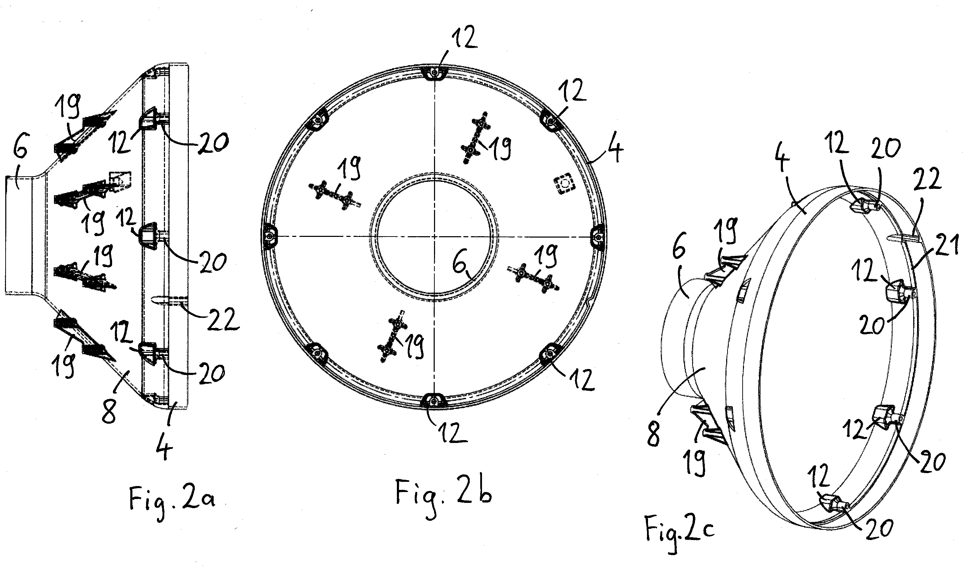

Fig. 2a zeigt eine Seitenansicht, Fig. 2b eine Draufsicht und Fig. 2c eine Schrägbildansicht des trichterförmigen Halterungsteils 2. Es ist zu erkennen, dass sich das trichterförmige Halterungsteil 2 von dem Anschluss 6 ausgehend im Bereich 8 trichterförmig zur kreisförmigen Aufnahme 4 aufweitet, wobei die Aufnahme 4 zur Halterung der Filterkassette 3 ausgebildet ist. Dabei weist das trichterförmige Halterungsteil 2 im Bereich des Anschlusses 6 einen Durchmesser von 10, 12,5 oder 15 cm auf und weitet sich zur Aufnahme 4 hin bis zu einem Durchmesser von 36,5 cm auf. Dabei ist das trichterförmige Formteil 2 als zur axialen Symmetrieachse 5 rotationssymmetrisches Formteil ausgebildet. In den Fig. 2a, 2b und 2c sind außerdem die Einbuchtungen 12 mit den Schraublöchern 13 zu erkennen, und in Fig. 2c ist zu erkennen, dass die Schraublöcher durch Schraubhülsen 20 hindurch verlaufen. Wenn die Filterkassette 3 in die Aufnahme 4 des trichterförmigen Halterungsteils 2 eingesetzt wird, liegt die Filterkassette 3 auf den Enden der Schraubhülsen 20 und außerdem auf einer im Inneren der Aufnahme 4 kreisförmig umlaufenden Auflagestufe 21 auf. Dabei entspricht die Außenkontur der Filterkassette 3 der Innenkontur der Aufnahme 4, so dass der Rand 9 der Filterkassette ringsum vom Randbereich der Aufnahme 4 umschlossen und gehaltert wird. An der Innenseite der Aufnahme 4 kann eine Positioniernase 22 vorgesehen sein, die dazu ausgelegt ist, in eine entsprechende Positionierrille an der Außenseite der Filterkassette 3 einzugreifen, um eine vorgebbare Orientierung der Filterkassette 3 relativ zur Aufnahme 4 zu erreichen. Darüber hinaus sind in den Fig. 2a bis 2c die Abstandselemente 19 zu erkennen, die an den sich trichterförmig aufweitenden Bereich 8 angeformt sind und einen gewissen Mindestabstand zwischen einer Einbauwandung und dem sich trichterförmig aufweitenden Bereich 8 gewährleisten.

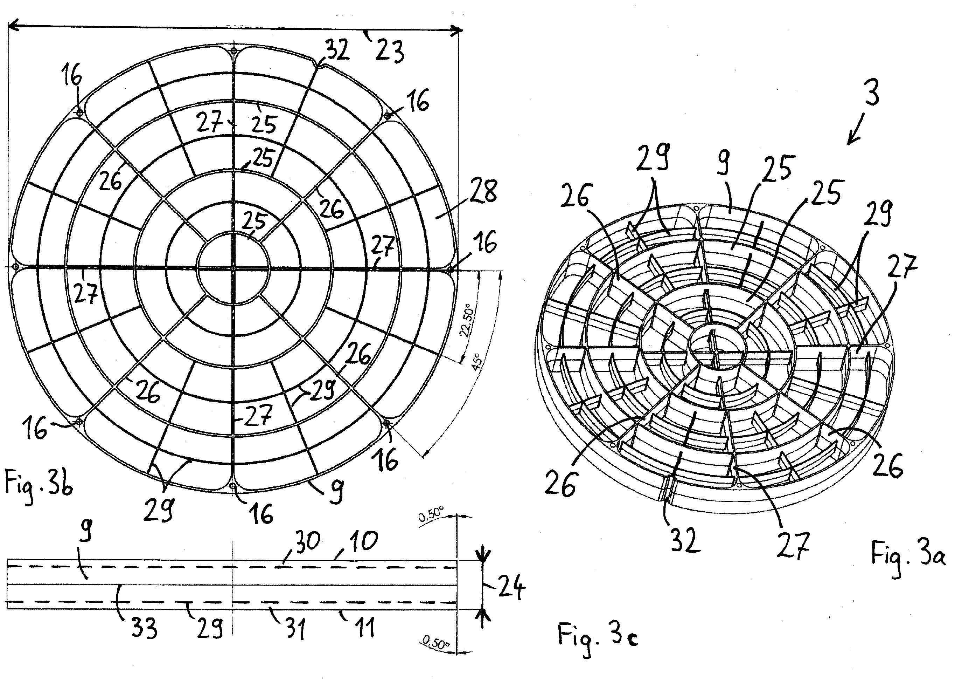

In den Fig. 3a bis 3c ist eine Ausführungsform der Filterkassette 3 gezeigt, welche in der in Fig. 1 gezeigten Filtervorrichtung 1 verwendet werden kann. Die in Fig. 3a bis 3c gezeigte Ausgestaltung ist jedoch keineswegs zwingend, es können auch anders ausgestaltete Filterkassetten in der Filtervorrichtung 1 von Fig. 1 eingesetzt werden. Fig. 3a zeigt eine Schrägbildansicht, Fig. 3b eine Draufsicht und Fig. 3c eine Seitenansicht der Filterkassette 3. Dabei ist die Filterkassette 3 an beiden Stirnflächen 10 und 11 mit einem gasdurchlässigen Abdeckmaterial versehen. Um das Innere der Filterkassette 3 erkennbar zu machen, ist das Abdeckmaterial in den Fig. 3a bis 3c weggelassen.

Die in den Fig. 3a bis 3c gezeigte Filterkassette 3 ist als Scheibe ausgebildet und weist eine kreisförmige Grundfläche auf, die von einem gasundurchlässigen Rand 9 umschlossen ist. Dabei ist der Durchmesser 23 der Filterkassette 3 größer als die Höhe 24 der Filterkassette 3. Das Filtermaterial ist im Inneren der Filterkassette 3 zwischen den beiden Stirnflächen 10 und 11 angeordnet. Dabei wird das Innere der Filterkassette 3 durch eine Mehrzahl von Trennwänden 25-27 in eine Vielzahl von Abteilungen 28 unterteilt, wobei das Filtermaterial innerhalb der Abteilungen 28 angeordnet ist. Jede der Trennwände 25-27 erstreckt sich von der ersten Stirnfläche 10 zur zweiten Stirnfläche 11 über die gesamte Höhe 24 der Filterkassette 3, so dass jede der so gebildeten Abteilungen 28 an allen Seiten von Trennwänden umschlossen ist und zudem an den Stirnflächen 10 und 11 durch das Abdeckmaterial abgedeckt wird. Jede der Abteilungen 28 wird von dem zu reinigenden Gas durchströmt, so dass das innerhalb der Abteilungen 28 angeordnete Filtermaterial Verunreinigungen des durchströmenden Gases absorbieren kann. Hierzu sind die Trennwände 25-27 in der Richtung des durchströmenden Gases ausgerichtet, so dass sie dem hindurchströmenden Gas möglichst wenig Widerstand entgegensetzen. Wenn die in Fig. 3b gezeigten Trennwände 25-27 in Richtung senkrecht zur Zeichenebene mit zu filterndem Gas durchströmt werden, dann setzen die in Richtung des durchströmenden Gases ausgerichteten Trennwände 25-27 dem durchströmenden Gas infolge ihrer Ausrichtung nur einen sehr geringen Widerstand entgegen. Dadurch wird jede der Abteilungen 28 gleichmäßig von dem zu reinigenden Gas durchströmt.

Bei dem in den Fig. 3a bis 3c gezeigten Beispiel einer Filterkassette 3 umfassen die Trennwände eine Mehrzahl von ringförmig umlaufenden Trennwänden 25. Darüber hinaus umfassen die Trennwände eine Mehrzahl von sich radial nach außen erstreckenden Trennwänden 26 und 27, die den Innenbereich bzw. Teile des Innenbereichs der Filterkassette 3 in eine Mehrzahl von Sektoren unterteilen. Dabei erstrecken sich die Trennwände 26 von der ersten der ringförmig umlaufenden Trennwände 25 aus radial nach außen bis hin zum Rand 9. Die Trennwände 27 erstrecken sich von der zweiten der ringförmig umlaufenden Trennwände 25 aus in radialer Richtung bis zum Rand 9. Durch eine derartige Unterteilung des Innenbereichs der Filterkassette 3 wird erreicht, dass die unterschiedlichen Abteilungen 28 alle eine vergleichbare Größe aufweisen.

Als Filtermaterial für die Filterkassette 3 kann beispielsweise Aktivkohle oder Kokosnussschale von unterschiedlicher Partikelgröße verwendet werden. Beispielsweise kann Aktivkohle mit einer durchschnittlichen Partikelgröße im Bereich von 0,5 mm bis 5 mm, weiter vorzugsweise im Bereich von 2 mm bis 4 mm eingesetzt werden.

Durch die Unterteilung des Innenraums der Filterkassette 3 in unterschiedliche Abteilungen 28 wird dabei erreicht, dass das Filtermaterial gleichmäßig über den gesamten Querschnitt der Filterkassette 3 hinweg angeordnet ist. Dabei wird durch die Trennwände 25-27 verhindert, dass sich das Filtermaterial bei vertikaler oder schräger Anordnung der Filterkassette 3 infolge der Schwerkraft im unteren Bereich der Filterkassette 3 ansammelt. Die Trennwände 25-27 tragen also dazu bei, dass über die gesamte Stirnfläche der Filterkassette 3 hinweg eine gleichmäßige Beladung mit Filtermaterial vorhanden ist.

Um das innerhalb jeder Abteilung 28 befindliche Filtermaterial darüber hinaus noch weiter zu fixieren, können innerhalb jeder Abteilung 28 zusätzlich Trennstege 29 angeordnet sein. Im Unterschied zu den Trennwänden 25-27, die sich über die gesamte Höhe 24 der Filterkassette 3 erstrecken, erstrecken sich die Trennstege 29 nur über einen Teil der Höhe 24 der Filterkassette 3 und erstrecken sich somit nicht über die gesamte Höhe 24 von der ersten Stirnfläche 10 zur zweiten Stirnfläche 11 der Filterkassette 3. Vielmehr ist zwischen dem Trennsteg 29 und der ersten Stirnfläche 10 ein erster Freiraum 30 vorgesehen und zwischen dem Trennsteg 29 und der zweiten Stirnfläche 11 ist ein zweiter Freiraum 31 vorgesehen.

Durch das Belassen von Freiräumen 30, 31 in den Bereichen der Abteilung 28 nahe den Stirnflächen 10 und 11 wird erreicht, dass entlang der jeweiligen Stirnfläche 10 oder 11 oberhalb und unterhalb der Trennstege 29 das Filtermaterial jeweils durchgehend angeordnet ist. Indem die Trennstege 29 also nicht bis zu den Stirnflächen 10 und 11 hin reichen, sondern bereits vorher enden, wird erreicht, dass entlang der Stirnflächen 10 und 11 trotz des Vorhandenseins der fixierenden Trennstege 29 eine durchgehende Schicht von Filtermaterial angeordnet ist. Durch diese durchgehende Anordnung des Filtermaterials entlang der Stirnflächen bzw. entlang des an den Stirnflächen angebrachten Abdeckmaterials wird insbesondere die Entstehung von Hohlräumen und Zwischenräumen zwischen den Filterpartikeln verhindert, welche ein ungehindertes Durchströmen des zu filternden Gases erlauben würden und somit die Filterwirkung der Filterkassette 3 herabsetzen könnten. Indem die Trennstege 29 absichtlich nicht bis hin zu den Stirnflächen 10 und 11 geführt werden, wird insofern eine vollständigere und verbesserte Filterwirkung der Filterkassette 3 für das durchströmende Gas erzielt. Nichtsdestotrotz bewirken auch die schmäleren Trennstege 29 eine Fixierung des Filtermaterials innerhalb der jeweiligen Abteilung 28, so dass verhindert wird, dass das Filtermaterial innerhalb der Abteilung 28 schwerkraftbedingt zu einer Seite hin abrutscht. Durch die Kombination von Trennwänden 25-27 und Trennstegen 29 wird daher eine wirksame Fixierung des Filtermaterials in der Filterkassette 3 bewirkt.

Zur Befüllung der Filterkassette 3 mit Filtermaterial wird zunächst ein Zuschnitt des Abdeckmaterials auf die erste Stirnfläche 10 der Filterkassette 3 aufgelegt und mit dieser ersten Stirnfläche 10 verschweißt oder verklebt. Beispielsweise kann es sich bei dem Abdeckmaterial um ein Vliesmaterial aus Polymerfasern handeln, welches mittels einer Heizvorrichtung auf die Stirnfläche thermisch aufgeschweißt werden kann. Dabei ist es von Vorteil, wenn das Abdeckmaterial an allen Seiten um einige Millimeter hervorsteht, so dass die Kante des Randes 9 vom Abdeckmaterial überdeckt wird. Nachdem auf die erste Stirnfläche 10 der Filterkassette 3 ein entsprechendes Abdeckmaterial aufgebracht ist, werden die Abteilungen 28 der Filterkassette mit Filtermaterial befüllt, das Filtermaterial wird eingerüttelt und anschließend wird auf die zweite Stirnfläche 11 ein entsprechender Zuschnitt von Abdeckmaterial aufgebracht. Vorzugsweise handelt es sich bei dem Abdeckmaterial wieder um ein Vliesmaterial aus Polymerfasern, und vorzugsweise wird das Vliesmaterial durch thermisches Aufschweißen auf die zweite Stirnfläche 11 der Filterkassette 3 aufgebracht.

In den Fig. 3a und 3b ist zu erkennen, dass im Bereich des Randes 9 der Filterkassette 3 eine Mehrzahl von Schraublöchern 16 angeordnet ist, die sich in axialer Richtung durch die Filterkassette 3 hindurch erstrecken und zur Verschraubung der Filterkassette 3 mit dem trichterförmigen Halterungsteil 2 dienen. Darüber hinaus ist am Rand 9 der Filterkassette 3 eine Positionierrille 32 zu erkennen. Beim Einsetzen der Filterkassette 3 in die Aufnahme 4 greift die Positioniernase 22 in die Positionierrille 32 ein, so dass die Filterkassette 3 nur in einer bestimmten vorgegebenen Orientierung in die Aufnahme 4 einsetzbar ist.

In Fig. 3c ist die Filterkassette 3 in einer Seitenansicht gezeigt, in der der Rand 9 der Filterkassette, die erste Stirnfläche 10 und die zweite Stirnfläche 11 eingezeichnet sind. Außerdem sind die Trennstege 29 mittels gestrichelter Linien eingezeichnet. Es ist zu erkennen, dass sich die Trennstege 29 nicht vollständig von einer Stirnfläche 10 zur gegenüberliegenden Stirnfläche 11 erstrecken, sondern dass jeweils ein erster Freiraum 30 zwischen den Trennstegen 29 und der ersten Stirnfläche 10 und ein zweiter Freiraum 31 zwischen den Trennstegen 29 und der zweiten Stirnfläche 11 vorgesehen sind, durch die hindurch das Filtermaterial durchgehend an den Stirnflächen 10 und 11 angeordnet ist. Alternativ zu den beidseitig vorgesehenen Freiräumen 30, 31 kann auch lediglich an einer Seite eines Trennstegs ein Freiraum vorgesehen sein.

Darüber hinaus ist in Fig. 3c zu erkennen, dass der Rand 9 der Filterkassette 3 von der Mitte 33 zu der ersten Stirnfläche 10 und zur zweiten Stirnfläche 11 hin jeweils geringfügig nach innen geneigt verläuft, beispielsweise um 0,5° nach innen geneigt. Daraus ergibt sich von der Mitte 33 aus sowohl in Richtung zur ersten Stirnfläche 10 hin als auch zur zweiten Stirnfläche 11 hin ein sich geringfügig konisch verjüngender Verlauf des Rands 9 der Filterkassette 3 zu beiden Stirnflächen 10 und 11 hin. Dadurch wird das Einsetzen der Filterkassette 3 in die Aufnahme 4 erleichtert. Da die umlaufenden Kanten der Stirnflächen 10 und 11 jeweils durch Abdeckmaterial überdeckt werden, wird das Abdeckmaterial an den Kanten beim Zusammenschrauben der Filtervorrichtung 1 zwischen der Filterkassette 3 und der Aufnahme 4 zusammengepresst, wodurch sich ein gasdichter Abschluss zwischen der Filterkassette 3 und der Aufnahme 4 ergibt.

Bei dem in den Fig. 3a bis 3c beschriebenen Beispiel war eine spezielle Ausgestaltung von Trennwänden und Trennstegen vorgesehen worden, die sich als besonders vorteilhaft erwiesen hat. Eine für die Filtervorrichtung geeignete Filterkassette 3 könnte aber beispielsweise auch ausschließlich mit Trennwänden und ohne zusätzliche Trennstege realisiert werden. Eine funktionsfähige Filterkassette könnte darüber hinaus auch mit völlig anders angeordneten Trennwänden als den in den Fig. 3a bis 3c gezeigten ausgebildet werden, beispielsweise mit einem regelmäßigen Raster von Trennwänden. Eine für die Filtervorrichtung geeignete Filterkassette 3 kann im Innenraum beliebige Unterteilungen aufweisen. Die Trennwände könnten auch völlig weggelassen werden.

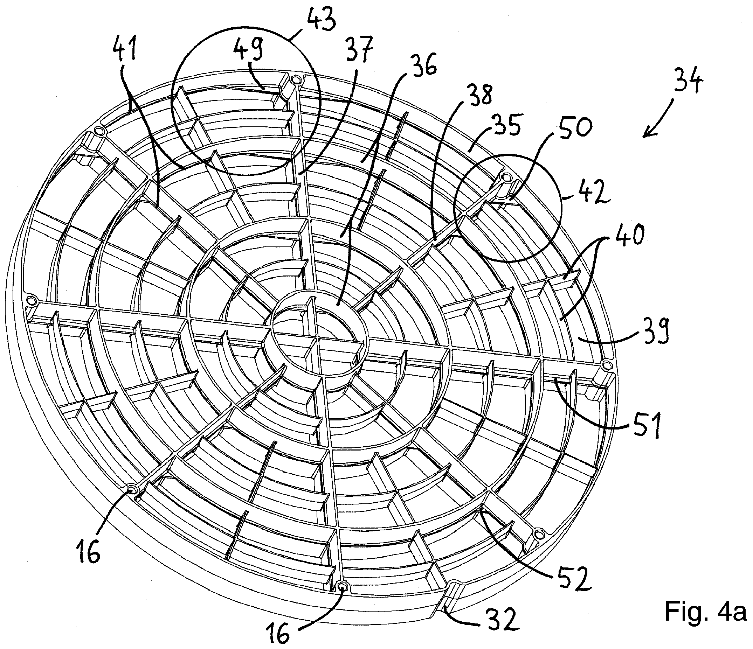

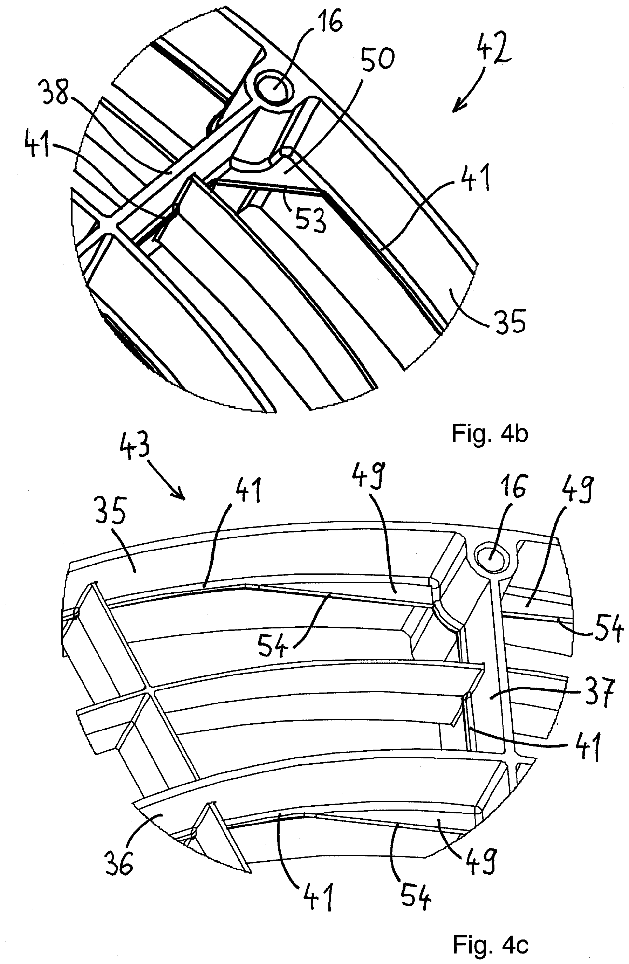

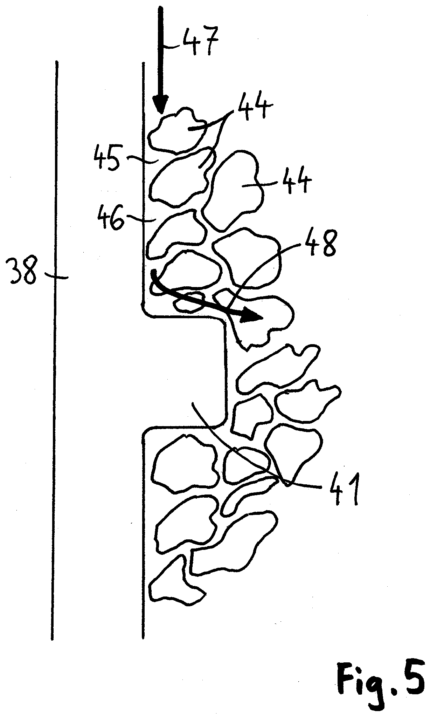

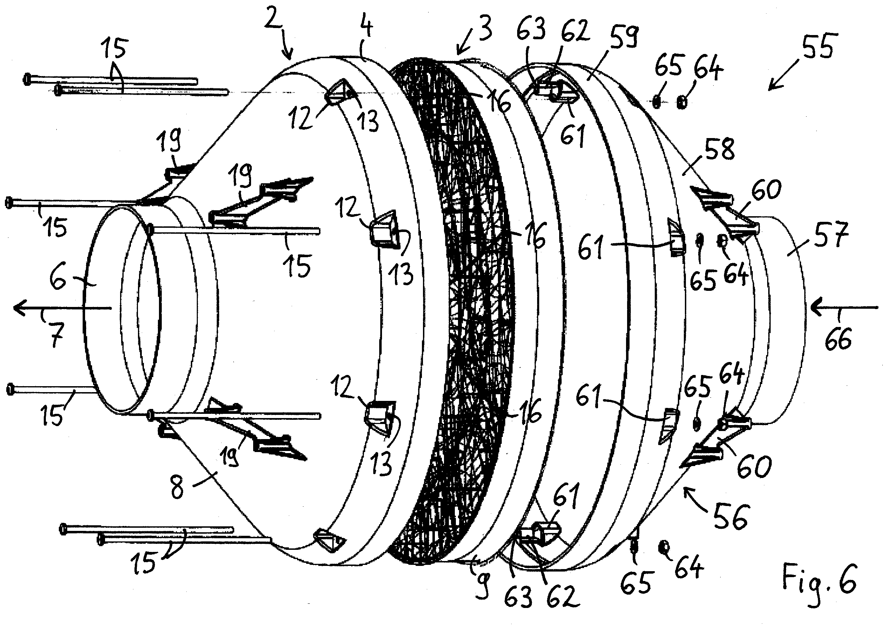

In den Figuren 4a, 4b, 4c und 5 ist ein weiteres Beispiel für eine Filterkassette 34 gezeigt. Diese Filterkassette 34 kann beispielsweise in der in Fig. 1 gezeigten Filtervorrichtung 1 oder in der in Fig. 6 gezeigten Filtervorrichtung 55 eingesetzt werden, ist aber in ihrem Einsatz nicht auf derartige Filtervorrichtungen beschränkt, sondern kann vielmehr in beliebigen Umgebungen und Einsatzszenarien verwendet werden, in denen eine Filterkassette zum Filtern eines Gases eingesetzt wird.

Die in Fig. 4a gezeigte Filterkassette 34 weist eine umlaufende Randwandung 35 auf, die zusammen mit den beiden Stirnflächen den mit Filtermaterial befüllbaren Innenraum der Filterkassette 34 umgibt. Dabei ist die Filterkassette 3 an beiden Stirnflächen mit einem gasdurchlässigen Abdeckmaterial versehen, das jedoch in den Fig. 4a bis 4c nicht mit eingezeichnet ist, um das Innere der Filterkassette 3 erkennbar zu machen. Der Innenraum der Filterkassette 34 wird durch Trennwände 36, 37, 38 in eine Vielzahl von Abteilungen 39 unterteilt, wobei die Trennwände 36, 37 und 38 jeweils von einer Stirnfläche der Filterkassette 34 zur gegenüberliegenden Stirnfläche verlaufen. Jede Abteilung 39 ist einzeln mit Filtermaterial befüllbar und jede Abteilung 39 ist einzeln von einem zu filternden Gas durchströmbar. Die Trennwände 36 sind als ringförmig umlaufende Trennwände ausgestaltet, die konzentrisch zu der Randwandung 35 verlaufen. Die Trennwände 37, 38 erstrecken sich jeweils in radialer Richtung von einer der ringförmig umlaufenden Trennwände 36 aus nach außen zur Randwandung 35 hin. Die Trennwände 36, 37 und 38 sind in Richtung der die Filterkassette 34 durchströmenden Luft ausgerichtet, so dass sie der durchströmenden Luft keinen bzw. nur einen geringen Widerstand entgegensetzen. Vorzugsweise sind die Trennwände 36, 37, 38 senkrecht zu den Stirnflächen angeordnet.

Wie bereits anhand von Fig. 3a bis 3c beschrieben worden war, können zur besseren Fixierung des Filtermaterials innerhalb der Abteilungen 39 zusätzlich Trennstege 40 vorgesehen sein, die sich jedoch nicht vollständig von einer Stirnfläche zur anderen Stirnfläche hin erstrecken. Der Einsatz derartiger Trennstege 40 ist jedoch optional, die Filterkassette 34 könnte auch ohne derartige Trennstege 40 gefertigt werden.

In Fig. 4a ist darüber hinaus erkennbar, dass im Randbereich der Filterkassette 34 Schraublöcher 16 zur Verschraubung der Filterkassette mit einer jeweiligen Aufnahme vorgesehen sind. Darüber hinaus ist an der Randwandung 35 eine Positionierrille 32 vorgesehen. Diese Positionierrille 32 ist dazu ausgelegt, mit einer entsprechenden Ausbuchtung auf Seiten der Aufnahme in Eingriff zu kommen. Dadurch wird eine festgelegte Orientierung der Filterkassette 34 relativ zu der jeweiligen Aufnahme gewährleistet. Dabei kann die Aufnahme auch abweichend von der in Fig. 1 gezeigten Aufnahme 4 gestaltet sein.

Bei der in Fig. 4a gezeigten Filterkassette 34 sind sowohl an der Innenseite der Randwandung 35 als auch an den Trennwänden 36, 37 und 38 jeweils Rippen 41 angeformt, die sich ins Innere des innerhalb der Abteilungen 39 befindlichen Filtermaterials hinein erstrecken. Diese Rippen 41 sind auch in den in Fig. 4a gekennzeichneten Bildausschnitten 42 und 43 erkennbar, die in Fig. 4b und Fig. 4c jeweils vergrößert herausgezeichnet sind.

In Fig. 4b, welche den Bildausschnitt 42 zeigt, sind insbesondere an der Innenseite der Randwandung 35 und an der Trennwand 38 angeformte Rippen 41 zu erkennen. Die Rippen 41 verlaufen etwa in der Mitte zwischen den beiden Stirnflächen in Richtung parallel zu den Stirnflächen und erstrecken sich von der jeweiligen Wandung aus in das in der jeweiligen Abteilung 39 befindliche Filtermaterial hinein.

In Fig. 4c, welche den Bildausschnitt 43 zeigt, sind mehrere Rippen 41 zu erkennen, welche sich ebenfalls von der jeweiligen Wandung aus in das in der jeweiligen Abteilung 39 befindliche Filtermaterial hinein erstrecken. Eine der Rippen 41 ist an die Randwandung 35 angeformt, eine Rippe ist an die Trennwand 37 angeformt, und eine Rippe ist an die ringförmig umlaufende Trennwand 36 angeformt.

Die Wirkungsweise der an die Wandungen angeformten Rippen 41 ist in Fig. 5 veranschaulicht. Fig. 5 zeigt die Trennwand 38 mit einer daran angebrachten oder angeformten Rippe 41, die sich ins Innere des innerhalb der Abteilung 39 befindlichen Filtermaterials 44 erstreckt. Bei dem in Fig. 5 gezeigten Beispiel handelt es sich bei dem Filtermaterial 44 um ein partikelförmiges Filtermaterial, beispielsweise um Partikel von Aktivkohle oder Kokosnussschale. Es ist zu erkennen, dass sich insbesondere im Bereich entlang der Trennwand 38 Hohlräume 45, 46 ausbilden. Wenn das zu reinigende Gas in Richtung des Pfeils 47 durch das Filtermaterial 44 hindurchströmt, kann es insbesondere im Bereich nahe der Trennwand 38 die insbesondere direkt an der Wandung ausgebildeten Hohlräume 45, 46 weitgehend ungehindert durchströmen, so dass gerade im Bereich nahe der Wandung die Filterwirkung des Filtermaterials 44 vergleichsweise gering ist. Durch die Rippe 41 wird das ungehinderte Entlangströmen des zu filternden Gases entlang den an der Trennwand 38 ausgebildeten Hohlräumen 45, 46 verhindert. Die Rippe 41 dient zum einen dazu, das Entlangströmen des zu filternden Gases an der Wand entlang zu blockieren und somit ein ungefiltertes Durchströmen von zu filterndem Gas zu vermeiden. Zum anderen dient die Rippe 41 dazu, den zu filternden Gasstrom in Richtung des Pfeils 48 ins Innere der Abteilung 39 zu lenken und dadurch den Kontakt zwischen dem zu filternden Gas und den Partikeln des Filtermaterials 44 zu intensivieren. Durch die Rippe 41 wird der Gasstrom also ins Innere des Filtermaterials umgelenkt, so dass sich ein verbesserter Kontakt und eine erhöhte Kontaktzeit zwischen dem zu filternden Gas und dem Filtermaterial 44 ergibt. Dadurch werden auch die Anteile des Gasstroms, die bislang an den Wandungen entlang die Filterkassette weitgehend ungefiltert durchdringen konnten, einer intensiven Filterung unterzogen, so dass sich im Ergebnis eine verbesserte Filterwirkung der Filterkassette 34 ergibt.

Bei der bislang beschriebenen Ausführungsform ist lediglich eine in der Mitte der jeweiligen Wandung verlaufende Rippe 41 vorgesehen. Alternativ dazu können mehrere Rippen übereinander in verschiedenen Höhen der jeweiligen Wandung angebracht sein. Durch dieses Bereitstellen von verschiedenen übereinander angeordneten Rippen beziehungsweise Lamellen kann der Kontakt zwischen dem zu filternden Gas und dem Filtermaterial weiter verbessert werden.

Als weitere Maßnahmen zur Verbesserung der Filterwirksamkeit sind bei der in den Figuren 4a, 4b und 4c gezeigten Filterkassette 34 jeweils in den oberen Bereichen der Abteilungen 39 Abschattungsstege 49 bis 52 vorgesehen. Diese Abschattungsstege 49 bis 52 können zusätzlich zu den Rippen 41 vorgesehen sein. Darüber hinaus sind auch Ausführungsformen der Filterkassette 34 möglich, bei denen die Filterkassette nur mit Abschattungsstegen 49 bis 52 ausgestattet ist, aber keine Rippen 41 aufweist.

Die in den Figuren 4a, 4b und 4c gezeigte Filterkassette 34 ist in der Regel in einer bestimmten Position und Orientierung in eine Filtervorrichtung eingebaut. Die Filterkassette 34 kann beispielsweise vertikal oder schräg orientiert in eine Filtervorrichtung eingesetzt werden. Der Innenbereich der Filterkassette 34 ist mit einem Filtermaterial befüllt, beispielsweise mit Partikeln aus Aktivkohle oder Kokosnussschale, wobei an den beiden Stirnflächen der Filterkassette 34 jeweils ein gasdurchlässiges Abdeckmaterial aufgeschweißt ist, um das Filtermaterial im Innenraum der Filterkassette 34 zu halten. Wenn nun die Filterkassette 34 vertikal oder schräg zur Richtung der Schwerkraft orientiert sind, sacken die Filterpartikel schwerkraftbedingt in die unteren Bereiche der jeweiligen Abteilungen 39 ab, so dass die Gefahr besteht, dass sich insbesondere in den oberen Bereichen der Abteilungen 39 Freiräume ausbilden, durch die das zu filternde Gas ungehindert hindurchströmen kann. Dadurch wird die Filterwirkung der Filterkassette 34 beeinträchtigt. Um das ungehinderte Durchströmen der Freiräume zu verhindern, sind die Abschattungsstege 49 bis 52 dazu ausgelegt, die oberen Bereiche der Abteilungen 39 abzudecken, in denen sich bei vertikaler oder schräger Anordnung der Filterkassette 34 die Freiräume ausbilden. Indem die Freiräume mittels der Abschattungsstege 49 bis 52 abgedeckt werden, wird verhindert, dass die zu filternde Luft ungehindert durch die Freiräume hindurchströmen kann.

In der Detailansicht von Fig. 4b ist die Anordnung der Abschattungsstege 50 gut zu erkennen. Die Abschattungsstege 50 erstrecken sich jeweils von der Innenseite der Randwandung 35 und der Trennwand 38 aus ins Innere der jeweiligen mit Filtermaterial befüllten Abteilung 39 und verlaufen dabei parallel zu den Stirnflächen der Filterkassette 34. Die untere Kontur 53 der Abschattungsstege 50 verläuft dabei vorzugsweise in horizontaler Richtung.

In der Detailzeichnung von Fig. 4c sind die Abschattungsstege 49 zu erkennen, die sich von der Innenseite der Randwandung 35 bzw. von der ringförmig umlaufenden Trennwand 36 und der radial verlaufenden Trennwand 37 aus parallel zu den Stirnflächen ins Innere der Abteilungen 39 hinein erstrecken. Dabei verläuft die untere Kontur 54 der Abschattungsstege 49 wieder in horizontaler Richtung, so dass die Form der Abschattungsstege 49 der von der im oberen Bereich der Abteilungen 39 zu erwartenden Freiräume entspricht bzw. etwas größer als die entstehenden Freiräume gewählt ist. Dabei sollte der Abschattungssteg 49 jedoch auch nicht wesentlich größer als die zu erwartenden Freiräume gewählt werden, um nicht zu viel Filterfläche zu verlieren.

Wenn sich im oberen Bereich der Abteilung 39 infolge des Absackens des Filtermaterials ein freier Hohlraum bildet, dann wird dieser Hohlraum durch die Abschattungsstege 49 bis 52 wirksam abgedeckt. Mittels der Abschattungsstege 49 bis 52 kann daher verhindert werden, dass das zu filternde Gas die Freiräume ungehindert durchströmt und dabei mit dem Filtermaterial nicht ausreichend in Kontakt kommt. Darüber hinaus wird der ankommende Strom von zu filterndem Gas durch die Abschattungsstege 49 bis 52 ins Innere der Abteilungen 39 geführt, wo sich ausreichend Filtermaterial zum Filtern des Gasstroms befindet. Der ankommende Gasstrom wird durch die Abschattungsstege 49 bis 52 so umgeleitet, dass sich ein für die Filterung ausreichender Kontakt zwischen Gasstrom und Filtermaterial ergibt.

Die an der Randwandung 35 angeordnete Positionierrille 32 ist dazu ausgelegt, beim Einsetzen der Filterkassette 34 in eine Aufnahme mit einer an der Aufnahme angebrachten oder angeformten Positioniernase so in Eingriff zu kommen, dass eine vorgegebene Orientierung der Filterkassette 34 relativ zur Filteraufnahme gegeben ist. Dadurch ist gewährleistet, dass die Abschattungsstege 49 bis 52 dort angeordnet sind, wo die Entstehung von Freiräumen zu erwarten ist.

Darüber hinaus kann das Absacken von Filtermaterial, insbesondere von partikelförmigem Filtermaterial, dadurch verringert werden, dass das an den Stirnflächen angebrachte teilweise gasdurchlässige Vliesmaterial versteift wird. Durch eine derartige Versteifung des Vliesmaterials, die jedoch nicht zu Lasten der Gasdurchlässigkeit gehen sollte, kann verhindert werden, dass sich das Vliesmaterials ausbeult und das Filtermaterial dadurch weiter nach unten sackt. Zur Versteifung des Vliesmaterials hat sich insbesondere der Einsatz von Mehrkomponenten-Spinnvliesen bewährt, wobei derartige Spinnvliese beispielsweise verspinnte Polypropylenfasern an der Innenseite und verspinnte Polyamidfasern an der Außenseite aufweisen können.

Fig. 6 zeigt eine als Inlinefilter ausgebildete Filtervorrichtung 55, welche zusätzlich zu dem trichterförmigen Halterungsteil 2 und der Filterkassette 3 ein weiteres trichterförmiges Halterungsteil 56 umfasst. Ebenso wie das trichterförmige Halterungsteil 2 weist auch das weitere trichterförmige Halterungsteil 56 einen Anschluss 57 für einen Schlauch oder ein Rohr auf, weitet sich ausgehend von dem Anschluss 57 im Bereich 58 trichterförmig nach außen auf und bildet eine Aufnahme 59 für die Filterkassette 3 aus. Dabei kann das weitere trichterförmige Halterungsteil 56 beispielsweise baugleich zum trichterförmigen Halterungsteil 2 ausgebildet sein, das trichterförmige Halterungsteil 56 kann aber auch eine vom trichterförmigen Halterungsteil 2 abweichende Form aufweisen.

Beim Zusammenbau der Filtervorrichtung 55 wird die Filterkassette 3 mit der Stirnfläche 10 voran in die Aufnahme 4 eingesetzt, so dass ein Teil des Randes 9 der Filterkassette 3 vom Randbereich der Aufnahme 4 umschlossen wird. Anschließend wird die Aufnahme 59 von der gegenüberliegenden Seite her so auf die Filterkassette 3 aufgesteckt, dass die Filterkassette 3 mit der Stirnfläche 11 voran in die Aufnahme 59 eingeschoben wird und der Randbereich der Aufnahme 59 einen Teil des Randes 9 der Filterkassette 3 umschließt. Auf diese Weise wird die Filterkassette 3 von beiden Seiten her durch die Aufnahmen 4, 59 der beiden trichterförmigen Halterungsteile 2, 56 gehaltert. Im Bereich 58 des trichterförmigen Halterungsteils 56 sind Abstandselemente 60 vorgesehen, die beim Einbau der Filtervorrichtung 55 in eine Einbauumgebung einen gewissen Mindestabstand zwischen der Filtervorrichtung 55 und der Einbauumgebung gewährleisten.

Anschließend werden das trichterförmige Halterungsteil 2, die Filterkassette 3 und das weitere trichterförmige Halterungsteil 56 miteinander verschraubt. Hierzu weist das weitere trichterförmige Halterungsteil 56 Einbuchtungen 61 auf, an die Schraubhülsen 62 für die Schraublöcher 63 angeformt sind. Zur Verschraubung werden Gewindeschrauben 15 durch die Schraublöcher 13, 16 und 63 hindurchgesteckt und mittels geeigneter Muttern 64 und Beilagscheiben 65 verschraubt. Dadurch werden das trichterförmige Halterungsteil 2 und das weitere trichterförmige Halterungsteil 56 von beiden Seiten her in axialer Richtung gegen die Filterkassette 3 gepresst. Da die Stirnflächen 10 und 11 der Filterkassette 3 jeweils mit einem Abdeckmaterial versehen sind, das über den Rand 9 hinaus leicht übersteht, wird das Abdeckmaterial beim Verschrauben der Filtervorrichtung 55 zwischen der Aufnahme 4 und dem Rand 9 bzw. zwischen dem Rand 9 und der Aufnahme 59 zusammengedrückt. Dadurch ergibt sich jeweils ein gasdichter Abschluss zwischen dem trichterförmigen Halterungsteil 2, der Filterkassette 3 und dem weiteren trichterförmigen Halterungsteil 56, so dass die gesamte Filtervorrichtung 55 vom Anschluss 57 bis zum Anschluss 6 mit dem zu reinigenden Gas bzw. der zu reinigenden Luft durchströmt werden kann.

Die Inline-Filtervorrichtung 55 kann beispielsweise am abströmseitigen Anschluss 6 mit einem Rohr oder einem Schlauch verbunden werden, um Luft oder ein anderes Gas in Richtung des Pfeils 7 abzusaugen. Hierzu kann der Anschluss 6 beispielsweise mit einem Gebläse oder einem Ventilator verbunden sein. Am anströmseitigen Anschluss 57 ist die Inline-Filtervorrichtung 55 mit einem Schlauch oder einem Rohr verbunden, über das der Inline-Filtervorrichtung 55 ein zu reinigendes Gas in Richtung des Pfeils 66 zugeführt werden kann. Auf diese Weise ergibt sich ein Strom des zu filternden Gases durch die Inline-Filtervorrichtung 55. Dabei wird der Strom des zu filternden Gases durch das trichterförmige Halterungsteil 56 zunächst aufgeweitet und durchdringt dann die etwa senkrecht zum Gasstrom angeordnete Filterkassette 3. Dabei ist der Durchmesser der Filterkassette 3 deutlich höher als der Durchmesser am Anschluss 57, so dass der aufgeweitete Luftstrom die vergleichsweise große zweite Stirnfläche 11 der in etwa senkrecht zum Luftstrom angeordneten Filterkassette 3 durchdringt und dabei gefiltert wird. Die Aufweitung des Gasstroms im trichterförmigen Halterungsteil 56 hat dabei zum einen den Vorteil, dass die Strömungsgeschwindigkeit des zu filternden Gases im Bereich der Filterkassette 3 deutlich abgesenkt wird, so dass das zu filternde Gas das Filtermaterial mit vergleichsweise langsamer Strömungsgeschwindigkeit passiert, so dass für die Adsorption von Verunreinigungen an den Filterpartikeln genügend Zeit zur Verfügung steht. Ein weiterer Vorteil ist, dass der zu filternde Gasstrom durch eine große Stirnfläche hindurchtritt, so dass infolge der großen Querschnittsfläche pro Flächeneinheit nur eine vergleichsweise geringe Menge an Verunreinigungen adsorbiert werden muss. Dadurch wird die Schadstoffadsorption auf eine vergleichsweise große Querschnittsfläche verteilt, so dass das Filtermaterial pro Flächeneinheit nur vergleichsweise wenig Schmutz adsorbieren muss. Die Beladung des Filtermaterials pro Flächeneinheit wird auf diese Weise verringert. Im Ergebnis muss die Filterkassette 3 der Inline-Filtervorrichtung 55 nur vergleichsweise selten ausgewechselt werden und somit wird eine lange Nutzungsdauer ermöglicht.

Zur Intensivierung der Filterwirkung können zwischen dem trichterförmigen Halterungsteil 2 und dem weiteren trichterförmigen Halterungsteil 56 auch mehrere hintereinander angeordnete Filterkassetten eingefügt werden. Ein zu filterndes Gas würde dann durch die hintereinander angeordneten Filterkassetten strömen, wobei das zu filternde Gas beim Durchtritt durch jede der Filterkassetten weiter gereinigt wird.

### Bezugszeichenliste

1 Filtervorrichtung
2 trichterförmiges Halterungsteil
3 Filterkassette
4 Aufnahme für Filterkassette
5 axiale Symmetrieachse
6 Anschluss
7 Saugrichtung
8 Bereich des trichterförmigen Halterungsteils
9 Rand der Filterkassette
10 erste Stirnfläche der Filterkassette
11 zweite Stirnfläche der Filterkassette
12 Einbuchtungen
13 Schraublöcher des trichterförmigen Halterungsteils
14 Abstand
15 Gewindeschrauben
16 Schraublöcher der Filterkassette
17 Flügelmuttern
18 Beilagscheiben
19 Abstandselemente
20 Schraubhülsen
21 Auflagestufe
22 Positioniernase
23 Durchmesser der Filterkassette
24 Höhe der Filterkassette
25 ringförmig umlaufende Trennwände
26 radial verlaufende Trennwände
27 radial verlaufende Trennwände
28 Abteilungen
29 Trennstege
30 erster Freiraum
31 zweiter Freiraum
32 Positionierrille
33 Mitte des Randes
34 Filterkassette
35 Randwandung
36 ringförmig verlaufende Trennwände
37 radial verlaufende Trennwände
38 radial verlaufende Trennwände
39 Abteilungen
40 Trennstege
41 Rippen
42 Bildausschnitt
43 Bildausschnitt
44 Filtermaterial
45, 46 Hohlräume
47 Pfeil
48 Pfeil
49 - 52 Abschattungsstege
53 untere Kontur der Abschattungsstege 50
54 untere Kontur der Abschattungsstege 49
55 Filtervorrichtung
56 weiteres trichterförmiges Halterungsteil
57 Anschluss
58 Bereich des trichterförmigen Halterungsteils
59 Aufnahme für Filterkassette
60 Abstandselemente
61 Einbuchtungen
62 Schraubhülsen
63 Schraublöcher
64 Muttern
65 Beilagscheiben
66 Pfeil

## Patentansprüche

1. Eine Filterkassette (34), welche aufweist:
eine zumindest teilweise gasdurchlässige erste Stirnfläche,
eine gegenüber der ersten Stirnfläche angeordnete zumindest teilweise gasdurchlässige zweite Stirnfläche,
eine umlaufende Randwandung (35), die zusammen mit der ersten Stirnfläche und der zweiten Stirnfläche einen Innenbereich der Filterkassette (34) umgibt,
eine Mehrzahl von Trennwänden (36-38), die sich innerhalb des Innenbereichs der Filterkassette (34) jeweils von der ersten Stirnfläche zur zweiten Stirnfläche erstrecken und den Innenbereich der Filterkassette (34) in eine Mehrzahl von Abteilungen (39) unterteilen,
**dadurch gekennzeichnet, dass**
an mindestens einer von einer Innenseite der Randwandung (35) und einer oder mehreren Trennwänden (36-38) zumindest abschnittsweise eine oder mehrere Rippen (41) angebracht oder angeformt sind,
wobei die Rippen (41) dazu ausgelegt sind, sich in ein in den Abteilungen (39) anordenbares Filtermaterial (44) hinein zu erstrecken.

2. Filterkassette nach Anspruch 1, **dadurch gekennzeichnet, dass** der Innenbereich der Filterkassette mit einem Filtermaterial befüllt ist.

3. Filterkassette nach Anspruch 1 oder Anspruch 2, **gekennzeichnet durch** mindestens eines von folgenden:
bei dem Filtermaterial handelt es sich um ein partikelförmiges Filtermaterial;
bei dem Filtermaterial handelt es sich um ein partikelförmiges Filtermaterial mit einer durchschnittlichen Korngröße im Bereich von 0,5 mm bis 5 mm.

4. Filterkassette nach einem der Ansprüche 1 bis 3, **dadurch gekennzeichnet, dass** die Filterkassette in Form einer Scheibe ausgebildet ist.

5. Filterkassette nach einem der Ansprüche 1 bis 4, **gekennzeichnet durch** mindestens eines von folgenden:
die Rippen sind zumindest abschnittweise entlang der jeweiligen Wandung verlaufend angebracht oder angeformt;
die Rippen verlaufen im Wesentlichen in Richtung parallel zu den Stirnflächen;
die Rippen verlaufen etwa auf halber Höhe zwischen den Stirnflächen im Wesentlichen in Richtung parallel zu den Stirnflächen entlang der Innenseite der Randwandung und/oder der einen oder mehreren Trennwände;
die Rippen sind etwa mittig zwischen den beiden Stirnflächen im Wesentlichen in Richtung parallel zu den Stirnflächen verlaufend an der Innenseite der Randwandung und/oder den einen oder mehreren Trennwänden angeordnet.

6. Filterkassette nach einem der Ansprüche 1 bis 5, **dadurch gekennzeichnet, dass** die Rippen dazu ausgelegt sind, ein im Wesentlichen ungefiltertes Entlangströmen eines zu filternden Gases an der Innenseite der Randwandung und/oder den einen oder mehreren Trennwänden zu verhindern.

7. Filterkassette nach einem der Ansprüche 1 bis 6, **dadurch gekennzeichnet, dass** die Rippen dazu ausgelegt sind, ein zu filterndes Gas, das die Filterkassette in Richtung von der ersten zur zweiten Stirnfläche durchströmt, von der Innenseite der Randwandung und/oder den einen oder mehreren Trennwänden aus ins Innere der Abteilungen zu lenken.

8. Filterkassette nach einem der Ansprüche 1 bis 7, **dadurch gekennzeichnet, dass** die Rippen dazu ausgelegt sind, eine Durchströmung von an der Innenseite der Randwandung und/oder den einen oder mehreren Trennwänden ausgebildeten Hohlräumen des Filtermaterials zu verhindern.

9. Filterkassette nach einem der Ansprüche 1 bis 8, **dadurch gekennzeichnet, dass** es sich bei dem Filtermaterial um ein partikelförmiges Filtermaterial handelt und dass die Rippen dazu ausgelegt sind, an der Innenseite der Randwandung und/oder an den einen oder mehreren Trennwänden ausgebildete Hohlräume des Filtermaterials abzuschatten.

10. Eine Filterkassette (34), welche aufweist:
eine zumindest teilweise gasdurchlässige erste Stirnfläche,
eine gegenüber der ersten Stirnfläche angeordnete zumindest teilweise gasdurchlässige zweite Stirnfläche,
eine umlaufende Randwandung (35), die zusammen mit der ersten Stirnfläche und der zweiten Stirnfläche einen Innenbereich der Filterkassette (34) umgibt,
eine Mehrzahl von Trennwänden (36-38), die sich innerhalb des Innenbereichs der Filterkassette (34) jeweils von der ersten Stirnfläche zur zweiten Stirnfläche erstrecken und den Innenbereich der Filterkassette (34) in eine Mehrzahl von Abteilungen (39) unterteilen,
**dadurch gekennzeichnet,**
**dass** infolge eines schwerkraftbedingten Absackens des Filtermaterials Freiräume in oberen Bereichen der Abteilungen (39) ausbildbar sind und
**dass** an mindestens einer von einer Innenseite der Randwandung (35) und einer oder mehreren Trennwänden (36-38) ein oder mehrere Abschattungsstege (49-52) angebracht oder angeformt sind, die dazu ausgelegt sind, die sich ausbildenden Freiräume ganz oder zumindest zum Teil abzuschatten.

11. Filterkassette nach Anspruch 10, **dadurch gekennzeichnet, dass** die Abschattungsstege dazu ausgelegt sind, einen innerhalb einer Abteilung höchstgelegenen Abschnitt der Abteilung abzuschatten, in dem sich Freiräume ausbilden.

12. Filterkassette nach Anspruch 10 oder Anspruch 11, **dadurch gekennzeichnet, dass** die Abschattungsstege sich parallel zu den Stirnflächen von der Wandung ins Innere der jeweiligen Abteilung hinein erstrecken.

13. Filterkassette nach einem der Ansprüche 10 bis 12, **dadurch gekennzeichnet, dass** die Abschattungsstege so ausgebildet sind, dass das zu filternde Gas, das über die Stirnflächen durch die Filterkassette hindurchströmt, durch die Abschattungsstege ganz oder teilweise am Durchströmen der Freiräume gehindert wird.

14. Eine Filtervorrichtung (1), welche eine Filterkassette (3) nach einem der Ansprüche 1 bis 9 oder 10 bis 13 umfasst, wobei die Filtervorrichtung zum Filtern eines Gases, insbesondere zum Filtern von Luft ausgebildet ist.

15. Verfahren zur Verbesserung der Wirksamkeit einer Filterkassette, wobei die Filterkassette umfasst
eine zumindest teilweise gasdurchlässige erste Stirnfläche, eine gegenüber der ersten Stirnfläche angeordnete zumindest teilweise gasdurchlässige zweite Stirnfläche und eine umlaufende Randwandung, die zusammen mit der ersten Stirnfläche und der zweiten Stirnfläche einen Innenbereich der Filterkassette umgibt, eine Mehrzahl von Trennwänden, die sich innerhalb des Innenbereichs der Filterkassette jeweils von der ersten Stirnfläche zur zweiten Stirnfläche erstrecken und den Innenbereich der Filterkassette in eine Mehrzahl von Abteilungen unterteilen, wobei das Verfahren umfasst
- Ermitteln der Bereiche der Filterkassette, an denen infolge eines schwerkraftbedingten Absackens des Filtermaterials von einem zu filternden Gas im Wesentlichen ungefiltert durchströmbare Freiräume auftreten;
- Vorsehen von einem oder mehreren Abschattungsstegen, die sich von mindestens einer von einer Innenseite der Randwandung und einer oder mehreren Trennwänden aus zumindest so weit ins Innere einer Abteilung erstrecken, dass entstehende Freiräume ganz der teilweise durch die Abschattungsstege abgeschattet werden.
